(19) Europäisches Patentamt / European Patent Office / Office européen des brevets

(11) **EP 3 450 311 B1**

(12) **EUROPEAN PATENT SPECIFICATION**

(45) Date of publication and mention
of the grant of the patent:
**02.11.2022 Bulletin 2022/44**

(21) Application number: **18188639.1**

(22) Date of filing: **13.08.2018**

(51) International Patent Classification (IPC):
*B64C 39/02* ^(2006.01)    *G03B 15/00* ^(2021.01)
*H04N 5/235* ^(2006.01)

(52) Cooperative Patent Classification (CPC):
**H04N 5/2354; B64C 39/024; B64D 47/08;**
**G03B 15/006; H04N 5/2351; H04N 5/2352;**
B64C 2201/127; B64D 47/02

(54) **FLYING OBJECT, CONTROL METHOD, AND STORAGE MEDIUM**

FLIEGENDES OBJEKT, STEUERUNGSVERFAHREN UND SPEICHERMEDIUM

OBJET VOLANT, PROCÉDÉ DE CONTRÔLE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2017 JP 2017169603**

(43) Date of publication of application:
**06.03.2019 Bulletin 2019/10**

(73) Proprietor: **CANON KABUSHIKI KAISHA
Ohta-ku
Tokyo 146-8501 (JP)**

(72) Inventor: **UEMURA, Hidetaka
Tokyo, 146-8501 (JP)**

(74) Representative: **TBK
Bavariaring 4-6
80336 München (DE)**

(56) References cited:
**EP-A1- 3 142 356        WO-A1-2016/154926
WO-A1-2016/197307        CN-A- 107 005 656
US-A- 5 959 668          US-A1- 2017 236 291**

**Description**

BACKGROUND OF THE INVENTION

Field of the Invention

The present invention relates to a flying object, a control method, and a storage medium.

Description of the Related Art

There has recently been interest in ultra-highly sensitive cameras that have an ISO of over 400,000. Because such cameras can record vivid color images even in low illuminance environments, in which conventional cameras have not been able to satisfactorily capture video, they are used in a wide range of fields such as not only broadcasting, but also surveillance, astronomical observation, and academics.

There is also currently interest in apparatuses which can be remotely controlled via a controller and have flying capabilities, referred to as drones. There are drones that include image capturing functions. Such drones are often provided with a light emitting member, such as a light emitting diode (LED), in order to make a notification regarding the position and the direction of the drone during flight and the status of the main body of the drone.

Japanese Patent Laid-Open No. 11-49099 describes a technology to easily and accurately detect the engine speed of a helicopter during flight by the flashing patterns of an LED in a remote controlled helicopter which performs an aerial spraying of a chemical and the like.

Japanese Patent Laid-Open No. 2004-268722 describes a technology that includes a GPS indicator light, which shows the status of a GPS control, and two warning lamps that indicate an abnormal state of the device body, and that shows different statuses with different combinations of lighting, flashing, and extinguishing of the lamps.

The document CN 107 005 656 A discloses a control method of a mobile device (such as an unmanned aerial vehicle), comprising: receiving a shooting instruction; responding to the shooting instruction and at least closing a light source affecting shooting; and performing shooting according to the shooting instruction.

Further related art is also known from the document WO 2016/197307 A1 and the document US 5 959 668 A.

The light irradiated from a light emitting member that is peripheral to a camera has a different influence on a capturing image according to the exposure settings of the camera. For example, in the case of exposure settings that make it possible to capture a bright image from a low-light photographic subject (such as low shutter speed and high ISO sensitivity), the influence of the light from the light emitting member on a captured image increases. However, technology to control the light emission of a light emitting member based on the exposure settings of a camera has not been conventionally known.

SUMMARY OF THE INVENTION

The present invention was made in view of the above situation, and provides a technology to control the light emission of a light emitting member based on an exposure setting of a camera.

The present invention in its first aspect provides a flying object as specified in claims 1 to 8.

The present invention in its second aspect provides a control method as specified in claim 9.

The present invention in its third aspect provides a storage medium as specified in claim 10.

The present invention in its fourth aspect provides a program as specified in claim 11.

Further features of the present invention will become apparent from the following description of exemplary embodiments with reference to the attached drawings.

BRIEF DESCRIPTION OF THE DRAWINGS

FIG. 1 is a block diagram showing an example of a functional configuration of an interchangeable lens type of digital video camera 100 that is an example of an image capturing apparatus.

FIG. 2 is a block diagram showing an example of a functional configuration of a drone 200 that is an example of a moving apparatus and a light emitting control apparatus.

FIG. 3 is a diagram showing program lines in the automatic exposure function of the digital video camera 100, and shows corresponding LED light emission amounts.

FIG. 4 is a flowchart showing processing for controlling the light emission amount of the LED (a light emission unit 204).

FIGS. 5A to 5C are diagrams showing changes of light emission patterns of the light emission unit 204 (LED) of the drone 200 according to the processing of FIG. 4.

FIGS. 6A to 6D are diagrams showing examples of timing control related to exclusive execution of the image capturing (exposure) of the digital video camera 100 and the light emission from the light emission unit 204 (LED) of the drone 200.

FIG. 7 is a diagram showing an example of program line control that prevents, whenever possible, the use of a shutter speed at which a light emitting period cannot be provided.

FIGS. 8A to 8B are diagrams showing another example of timing control related to exclusive execution of the image capturing (exposure) of the digital video camera 100 and the light emission from the light emission unit 204 (LED) of the drone 200.

FIG. 9 is a flowchart of processing for controlling the light emission timing of the LED (the light emission unit 204).

DESCRIPTION OF THE EMBODIMENTS

Hereinafter, embodiments of the present invention will be described with reference to the attached drawings. It should be noted that the technical scope of the present invention is defined by the claims, and is not limited by the following respective embodiments. Also, not all of the combinations of the aspects that are described in the embodiments are necessarily essential to the present invention. Also, the aspects that are described in the respective embodiments can be combined as appropriate.

First Embodiment

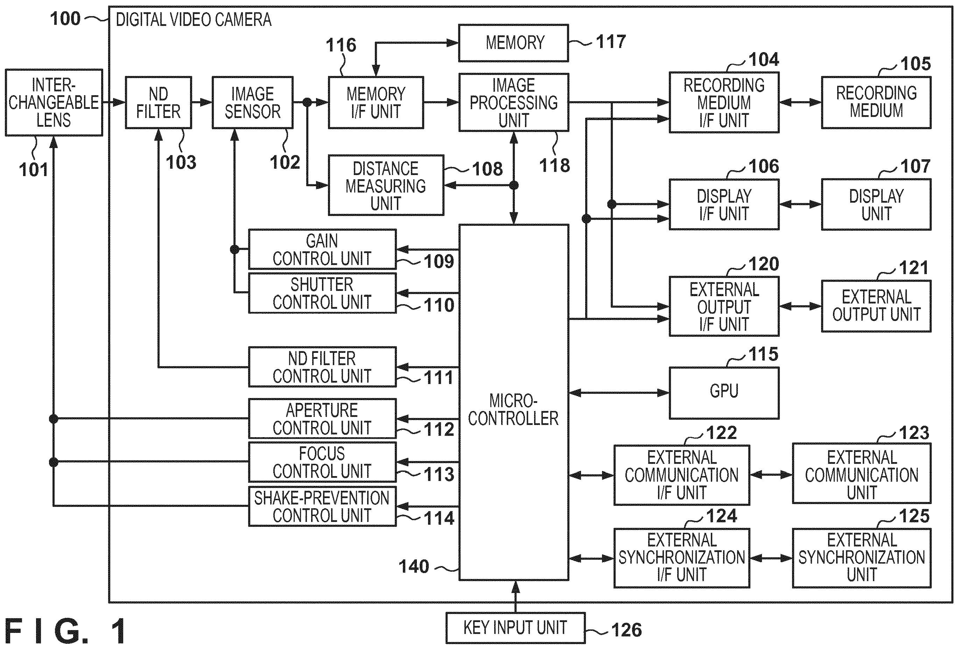

FIG. 1 is a block diagram showing an example of a functional configuration of an interchangeable lens type of digital video camera 100 that is an example of an image capturing apparatus. Note that in the present embodiment, the image capturing apparatus is not limited to the digital video camera 100 shown in FIG. 1, and may be, for example, a single-lens reflex camera, a compact camera with an integrated lens, a mobile telephone with a camera function, or the like.

One or more of the functional blocks shown in FIG. 1 may be realized by hardware such as ASIC or programmable logic array (PLA), and may be realized by a programmable processor such as a CPU or MPU executing software. They may also be realized through a combination of software and hardware. Accordingly, in the following description, even in cases in which different functional blocks are listed as the acting subject, they can be realized with the same hardware as the acting subject.

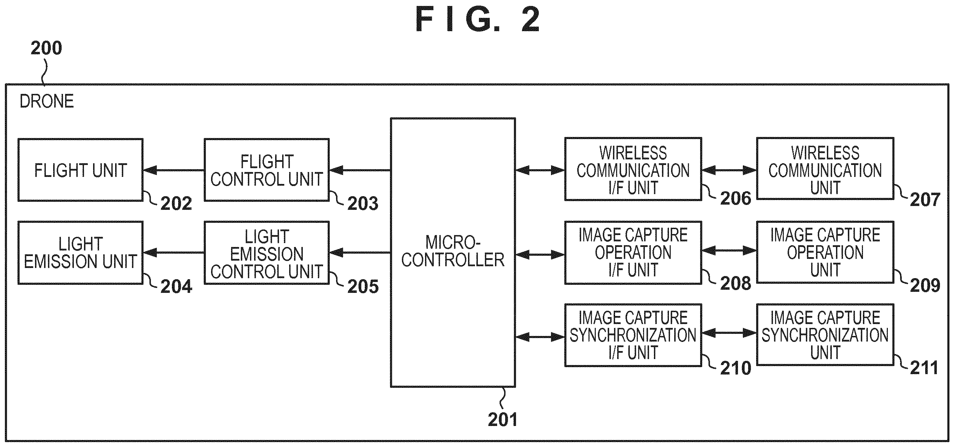

The digital video camera 100 is an external apparatus that is connected to a functional block of a drone 200 of FIG. 2, and a key input unit 126, a display unit 107, an external output unit 121, and an external synchronization unit 125 are exposed at a surface of the digital video camera 100.

An interchangeable lens 101 is an image capturing lens made up of a plurality of lens groups, internally includes a focus lens, a zoom lens, and a shift lens, and includes a diaphragm. An ND filter 103 is a neutral density filter provided in a digital video camera in order to adjust the amount of incident light separate from the diaphragm provided in the interchangeable lens 101.

An image sensor 102 has a configuration in which a plurality of pixels, which have photoelectric converting elements, are arranged in a two-dimensional array. The image sensor 102 photo-electrically coverts an optical image of a subject, which has been image formed by the interchangeable lens 101, by its pixels, and further converts it to analog or digital via an A/D conversion circuit, and outputs an image signal (RAW image data) in units of pixels.

A memory I/F unit 116 writes the RAW image data of all pixels output from the image sensor 102 to a memory 117, and also reads out the RAW image data held in the memory 117 and outputs it to an image processing unit 118. The memory 117 is a volatile storage medium that stores RAW image data of all pixels of any frame.

The image processing unit 118 performs image processing that corrects level difference caused by the image sensor 102 on the RAW image data of all pixels sent from the memory I/F unit 116. For example, the image processing unit 118 uses OB region pixels to correct pixel levels in an effective region, and perform correction for defective pixels using the surrounding pixels. Also, the image processing unit 118 performs processing such as vignetting correction, color correction, contour emphasis, noise removal, gamma correction, debayering, and compression. Also, with reference to the image data output from the image processing unit 118, processing for calculating a motion vector of a photographic subject is performed by a microcontroller 140, and the image processing unit 118 performs electronic shake-prevention processing such that image blur is offset based on the calculated motion vector. After the image processing unit 118 performs the above processing on RAW image data that is output from the image sensor 102, it outputs corrected image data to another functional block.

The microcontroller 140 includes a CPU, a ROM, a RAM, and the like, the CPU extracts a program stored in the ROM to a working region of the RAM and executes it, thereby performing overall control of operations of the digital video camera 100. Also, the microcontroller 140 realizes the processing of the present embodiment that will be described hereinafter by executing a program stored in the ROM. The RAM is for extraction of constants and variables for the operation of the microcontroller 140, programs read out from the ROM, and the like.

A recording medium I/F unit 104 is an interface between a recording medium 105 and the digital video camera 100, and controls the recording of image data received from the image processing unit 118 to, and the reading out of recorded image data from, the recording medium 105.

The recording medium 105 is configured by a semiconductor memory or the like for recording captured video or image data, and executes the recording of image data and the reading out of recorded image data according to the control of the recording medium I/F unit 104.

A display I/F unit 106 performs overlay/compositing and resizing processing on video data from the image processing unit 118 and data in a VRAM (Video RAM) that is rendered by a GPU 115, and outputs the resulting data to the display unit 107. The display unit 107 is a monitor or viewfinder which displays image data that is output from the display I/F unit 106 for confirming photographic angles of view, and confirming the setting state of the digital video camera 100.

The GPU 115 is a rendering engine that renders various information indicators, menu screens, and the like, of the digital video camera 100 to a VRAM. The GPU 115 has a character string and graphic rendering function, as well as an enlargement/reduction rendering function, a rotation rendering function, and a layer compositing function. The rendered VRAM data includes an alpha channel that expresses transparency, and can be displayed onscreen over the video by the display I/F unit 106. A distance measuring unit 108 uses the output signal from the image sensor 102 to calculate information such as a defocus amount and various types of reliability.

A gain control unit 109, a shutter control unit 110, an ND filter control unit 111, and an aperture control unit 112 described below are all blocks for exposure control. The control of these control units is performed by the microcontroller 140 based on the results of calculation, by the microcontroller 140, of the luminance level of the image data output from the image processing unit 118, or based on the operating parameters set manually by a user.

The gain control unit 109 controls the gain of the image sensor 102. Gain is a parameter that indicates the ratio of output to the input of the image sensor 102. In the present embodiment, gain may be replaced with the term "ISO sensitivity". The shutter control unit 110 controls the shutter speed of the image sensor 102. The ND filter control unit 111 controls the amount of light that is incident on the image sensor 102 via the ND filter 103. The aperture control unit 112 controls the diaphragm of the interchangeable lens 101.

A focus control unit 113 performs a different operation depending on whether the focus drive state held by the microcontroller 140 is AF (auto focus) or MF (manual focus). When MF, the focus control unit 113 performs focus adjustment of the interchangeable lens 101 according to the amount of focus movement requested from the key input unit 126, an external communication unit 123, or the like. Also, the focus control unit 113 can perform focus adjustment by the user rotating a focus ring that is incorporated into the interchangeable lens 101. When AF, processing is performed in which the focusing information of the focus is calculated by the microcontroller 140 with reference to the image data output from the image processing unit 118. The focus control unit 113 controls the internal focus lens of the interchangeable lens 101 based on the calculated focusing information. An AF frame can be set to a partial region of the image data by the microcontroller 140, and the focus information can be calculated based only on the photographic subject within the AF frame.

A shake-prevention control unit 114 performs electronic shake-prevention processing. First, processing is performed in which the motion vectors of a photographic subject are calculated by the microcontroller 140 with reference to the image data output by the image processing unit 118. Also, the shake-prevention control unit 114 controls the internal shift lens of the interchangeable lens 101 such that image blur is offset based on the calculated motion vectors.

An external output I/F unit 120 performs re-sizing processing on the video data from the image processing unit 118. It also performs signal conversion and control signal assignment suitable for the standards of the external output unit 121, and outputs the resulting data to the external output unit 121. The external output unit 121 is a terminal that externally outputs video data, such as an SDI terminal or an HDMI (registered trademark) terminal. It is possible for a monitor display or an external recording apparatus to be connected to the external output unit 121.

An external communication I/F unit 122 performs signal conversion and control signal assignment suitable for the standards of the external communication unit 123, and performs transmission and reception of signals with the external communication unit 123. The external communication unit 123 is equivalent to, for example, an infrared ray remote control receiving unit, a wireless/wired LAN interface, a LANC (registered trademark), RS-422, and the like. The external communication unit 123 can receive, from the outside, instructions equivalent to operations of the key input unit 126 that is incorporated into the digital video camera 100, the interchangeable lens 101, and the like. Also, the external communication unit 123 can receive setting change information on a menu screen that is displayed on the display unit 107 from external units.

An external synchronization I/F unit 124 is an interface which performs transmission and reception of synchronization signals with external devices by way of the external synchronization unit 125. At the time of synchronization signal input setting, the external synchronization I/F unit 124 receives synchronization signals from an external device by way of the external synchronization unit 125. At the time of synchronization signal output setting, the external synchronization I/F unit 124 transmits synchronization signals generated by the microcontroller 140 to an external device by way of the external synchronization unit 125. The external synchronization unit 125 is a terminal that performs the transmission and reception of synchronization signals with an external device, such as a GENLOCK terminal.

The key input unit 126 is an operating member made up of operating members such as keys (buttons) and dials, tactile switches, rings, and the like. These operating members receive user operations, and assume the role of reporting a control instruction to the microcontroller 140. The roles of some of these operating members can be changed and assigned a different function through a setting in the menu screen.

FIG. 2 is a block diagram showing and example of a functional configuration of the drone 200, which is an example of a moving apparatus and a light emission control apparatus. One or more of the functional blocks shown in FIG. 2 may be realized by hardware such as an ASIC or a programmable logic array (PLA), or may be realized by a programmable processor such as a CPU or an MPU executing software. They may also be realized through a combination of hardware and software. Accordingly, in the following description, even in cases in which different functional blocks are listed as the acting subject, they can be realized with the same hardware as the acting subject.

The drone 200 is an external apparatus that is connected to a functional block of the digital video camera 100 in FIG. 1, and an image capture operation unit 209 and an image capture synchronization unit 211 are exposed at a surface of the drone 200. Note that a moving apparatus, such as an automobile that does not have flying capabilities, may be used instead of the drone 200, which is an aircraft.

A microcontroller 201 is provided with a CPU, a ROM, a RAM, and the like, and the CPU extracts programs stored in the ROM to the working region of the RAM and performs overall control of the operations of the drone 200 by executing those programs. Also, the microcontroller 201 realizes processing of the present embodiment described hereinafter by executing a program stored in the ROM. The RAM is for extraction of constants and variables for the operation of the microcontroller 201, programs read out from the ROM, and the like.

A flight control unit 203 performs the drive control and the flight control (movement control), such as ascent, decent, turning, and front, rear, left and right movement, with respect to a flight unit 202 that is a flight member such as a propeller. A light emission control unit 205 performs light emission control with respect to a light emission unit 204, which is a light emitting member such as an LED, that makes information (moving apparatus information) related to the drone 200 visibly identifiable.

A wireless communication I/F unit 206 performs signal conversion and control signal assignment suitable to the standards of a wireless communication unit 207, and performs transmission and reception of signals with the wireless communication unit 207. The wireless communication unit 207 may be a wireless LAN interface or the like. The wireless communication unit 207 transmits control instructions from the user (a controller thereof) on land to the microcontroller 201 by way of the wireless communication I/F unit 206. Also, the wireless communication unit 207 transmits information received from the microcontroller 201 to the user (a controller thereof) on land.

An image capture operation I/F unit 208 performs signal conversion and control signal assignment suitable for the standards of the image capture operation unit 209, and transmits a control instruction to the image capture operation unit 209. The image capture operation unit 209 is a terminal connected to the external communication unit 123 of the digital video camera 100 in FIG. 1, and, for example, may be an infrared remote control transmission unit, wireless or wired LAN interface, a LANC (registered trademark), an RS-422, or the like. The image capture operation unit 209 transmits a control instruction from a user (a controller thereof) on land that was received by way of the microcontroller 201.

An image capture synchronization I/F unit 210 is an interface that performs the transmission and reception of synchronization signals with the digital video camera 100 by way of the image capture synchronization unit 211. At the time of synchronization signal input setting, the image capture synchronization I/F unit 210 receives a synchronization signal from the digital video camera 100 by way of the image capture synchronization unit 211. At the time of synchronization signal output setting, the image capture synchronization I/F unit 210 transmits a synchronization signal generated by the microcontroller 201 to an external device by way of the image capture synchronization unit 211. The image capture synchronization unit 211 is a terminal, such as a GENLOCK terminal, that is connected to the external synchronization unit 125 in FIG. 1.

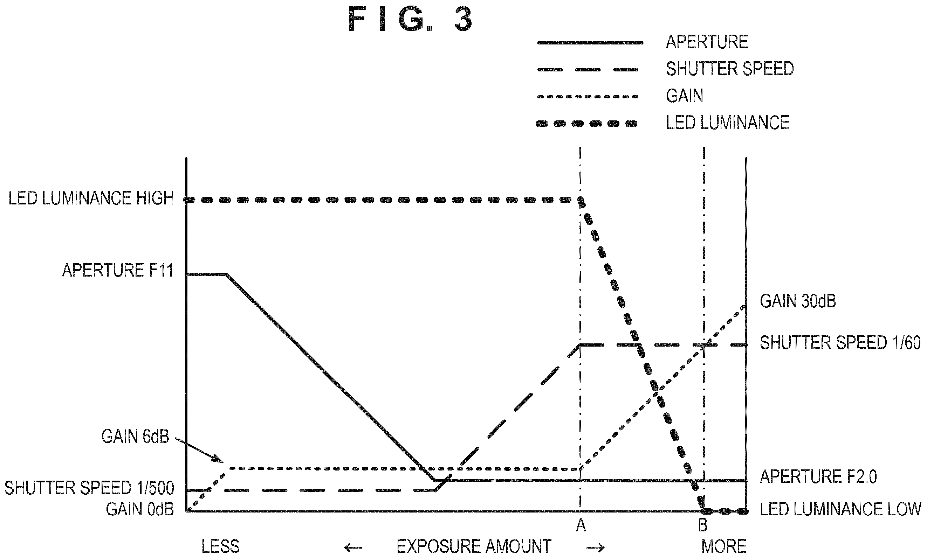

Next is a description, with reference to FIG. 3, of the processing of controlling the amount of light emission of the light emission unit 204 of the drone 200 based on the exposure settings of the digital video camera 100, as an example of light emission control based on the exposure settings. In the description of FIG. 3, the light emission unit 204 includes an LED as a light emitting member. FIG. 3 shows a diagram of program lines in the automatic exposure function of the digital video camera 100 and corresponding LED light emission amounts. Note that the program line in FIG. 3 is realized using the three parameters of gain, shutter speed, and aperture as the exposure setting parameters. However, the exposure setting parameters are not limited to these three parameters. For example, the program line may be realized with four parameters if an ND filter is added to these three exposure setting parameters.

The horizontal axis in FIG. 3 displays the exposure amount corresponding to the exposure settings, and the state at the left end is a state that is used when the exposure amount is the lowest, and a high luminance photographic subject is to be captured. Conversely, the state at the right end is a state that is used when the exposure amount is the highest, and a low luminance photographic subject is to be captured. According to the program line in FIG. 3, as the photographic subject becomes dark from the left end, the microcontroller 140 first increases the gain from 0 dB to 6 dB, and then changes the aperture from F11 to F2.0. Next, the microcontroller 140 switches the shutter speed from 1/500 seconds to long exposure of 1/60 seconds. Lastly, the microcontroller 140 increases the gain from 6 dB to 30 dB.

When performing LED (light emission unit 204) control, the microcontroller 201 of the drone 200 gradually decreases the LED light emission amount from a program line position that is greater than an exposure amount A. Furthermore, the microcontroller 201 turns off the LED from a program line position that is greater than an exposure amount B. Through this, even in a state that has a high exposure amount, otherwise referred to as a state of ultra-high sensitivity, it becomes possible to control the influence of the LED light on a captured image.

Note that control which gradually lowers the LED light emission amount has been described here, but the present example not falling under the scope of the claims is not limited to this control. For example, the microcontroller 201 may perform control that turns off the LED at a predetermined program line position, starts the flashing of the LED from a predetermined program line position, and then gradually lengthens the flashing cycle. Or, in a case in which the light emission unit 204 includes a plurality of LEDs, the microcontroller 201 may perform control that turns off an LED arranged in the image capturing direction at a predetermined program line position, and switches to a pattern of light emission that makes the direction of movement understandable by only a rear blade LED.

In more general terms, in cases in which the exposure settings correspond to a second exposure amount which is bigger than a first amount of exposure, the microcontroller 201 can perform control in such a way that the amount of light emitted from an LED becomes less than in a case in which the exposure settings correspond to the first amount of exposure. As control for reducing the LED emission amount, the microcontroller 201 may perform control to decrease the luminance level of an LED, may perform control to reduce the luminance of an LED, or may perform control to flash the LED. Also, in a case in which the light emission unit 204 includes a plurality of LEDs, as control to decrease the amount of emitted light of the LEDs, the microcontroller 201 may decrease the amount of light emission in only some of the LEDs.

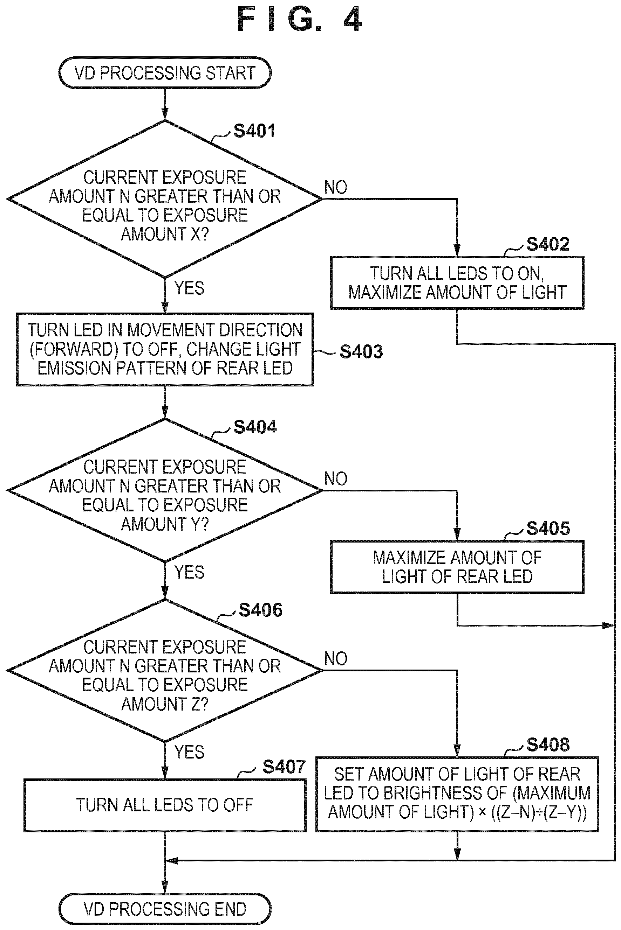

FIG. 4 is a flowchart of processing that controls the amount of light emitted by an LED (light emission unit 204) based on the exposure settings which complies to the program line in the automatic exposure function shown in FIG. 3. The processing of the steps in this flowchart, unless particularly stated otherwise, are realized by the microcontroller 201 executing a program. In FIG. 4, exposure amounts X, Y and Z have a magnitude relationship of $X<Y<Z$, with Z representing a state of the highest sensitivity. Also, the cycle of processing is described as a VD cycle that is normally used by a digital video camera. Note that the processing of FIG. 4 can also be applied at the time of exposure setting through manual operation.

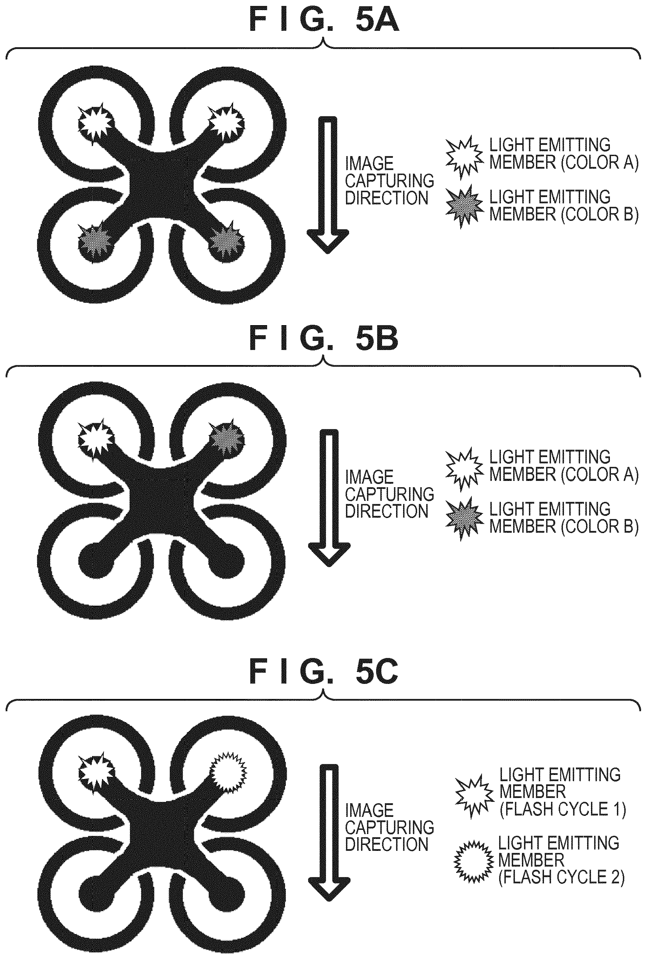

FIGS. 5A to 5C are overhead views from above the drone 200, and show the changes of light emission patterns of the light emission unit 204 (LED) of the drone 200 corresponding to the processing of FIG. 4. The drone 200 has four propellers and an LED that is a light emitting member and is installed under the propellers.

In step S401, the microcontroller 201 determines whether or not the exposure amount N, which corresponds to the current exposure settings, is greater than or equal to the exposure amount X. For example, the microcontroller 201 can acquire exposure settings from the digital video camera 100 through communication via the image capture operation unit 209 and the external communication unit 123. In step S401, if the exposure amount N is determined to be greater than or equal to the exposure amount X, processing proceeds to step S403, and if not, processing proceeds to step S402.

In step S402, the microcontroller 201 turns all of the LEDs to ON, and maximizes the amount of light. When this happens, as information related to the drone 200, the microcontroller 201 controls the colors of the LEDs to show the movement direction of the drone 200. For example, as shown in FIG. 5A, the microcontroller 201 makes the color of the LED in the image capturing direction (forward direction of movement), and the color of the rear LED different colors (such as red and green). Through this, the user operating the drone 200 from land is able to recognize the position and direction of movement of the drone 200 in flight.

In step S403, the microcontroller 201 of the present embodiment turns the LED in the image capturing direction (forward direction) to OFF. The microcontroller 201 also changes the emission pattern of the rear LED. When this happens, the microcontroller 201 may change the colors of the LEDs, or may change the flashing cycle. For example, as shown in FIG. 5B, the microcontroller 201 turns off the LED in the image capturing direction (forward direction of movement), and sets the color of the rear LEDs on the left and right to different colors. Alternatively, as shown in FIG. 5C, the microcontroller 201 turns off the LED in the image capturing direction (forward direction of movement), and causes the rear LEDs to flash with the flash cycle being different for the left and right. In such a case, the microcontroller 201 may control the flash cycle such that the LEDs do not emit light during the exposure of the image capturing unit (refer to the second embodiment described later in regards to the flash cycle). Through this, the user operating the drone 200 from land is able to recognize the position and direction of movement of the drone 200 in flight.

Note that the objective of turning off (stopping light emission) the LED in the image capturing direction (forward direction of movement) off in step S403 is to turn off an LED on a priority basis that is known to have a larger influence on captured images. The microcontroller 201 can select an LED to be turned off on any basis that conforms to this objective. For example, the microcontroller 201 may perform control to stop the light emission of an LED that is arranged at a position included in the angle of view of the digital video camera 100. In such a case, the microcontroller 201 controls the light emission of the LED that is arranged at a position not included in the angle of view of the digital video camera 100 such that information of the drone 200 (such as the direction of movement) is displayed. Alternatively, the microcontroller 201 may perform control to stop the light emission of an LED that is arranged at a position that is relatively close to the interchangeable lens 101. In such a situation, the microcontroller 201 controls the light emission of the LED that is arranged at a position relatively far from the interchangeable lens 101 in order to show information of the drone 200 (such as the movement direction).

In step S404, the microcontroller 201 determines whether or not the exposure amount N, which corresponds to the current exposure settings, is greater than or equal to the exposure amount Y. In step S404, in a case in which the exposure amount N is determined to be greater than or equal to the exposure amount Y, processing proceeds to step S406, or, in cases in which it is not, processing proceeds to step S405.

In step S405, the microcontroller 201 maximizes the amount of light of the rear LED.

In step S406, the microcontroller 201 determines whether or not the exposure amount N, which corresponds to the current exposure settings, is greater than or equal to the exposure amount Z. In step S405, in a case in which the exposure amount N is determined to be greater than or equal to the exposure amount Z, processing proceeds to step S407, or in cases in which it is not, processing proceeds to step S408.

In step S407, the microcontroller 201 turns all LEDs to OFF.

In step S408, the microcontroller 201 sets the amount of light of a rear LED to the amount of light calculated by the calculation formula below.

$$\text{set amount of light} = \text{maximum amount of light X} \times ((\text{exposure amount Z} - \text{exposure amount N}) \div (\text{exposure amount Z} - \text{exposure amount Y}))$$

Through the above processing, even in a state where the exposure amount is high, or in other words an ultra-highly sensitive state, it is possible to control the influence of LED light on a captured image. Also, with the exception of the case in step S407, the user controlling the drone 200 from land is able to recognize the position and direction of movement of the drone 200 in flight.

Note that the light emission pattern of an LED is not limited to the illustrated example. For example, the colors of the left and right LEDs, as opposed to the front and rear LEDs, may be different. Also, the position and movement direction may be understood from the amount of light emission, there may be many LEDs provided on the rear, and as previously stated, the position and movement direction may be understood by changing the color, flash cycle and amount of emitted light.

Also, the present embodiment is not limited to a configuration which emits light from LEDs such that they show information about the drone 200 (such as movement direction). The microcontroller 201 can cause an LED to emit light in accordance with any basis that is different to the exposure settings. Furthermore, as illustrated in FIG. 4, the microcontroller 201 controls this light emission based on the exposure settings. For example, the microcontroller 201 may, without regard to the movement direction of the drone 200, control the light emission such as causing all LEDs to emit light in the same state (such as the same color or the same flash cycle) and changing the amount of light emission based on the exposure settings. In such a case, the user can recognize the position of the drone 200 by the light of an LED.

Also, an LED is not only for recognizing the position of the drone 200, and the color, the lighting, and the flashing of an LED may be used to make notifications of the status (condition) of the drone 200 (such as remote control radio reception sensitivity and remaining battery level of the drone). Furthermore, for example, either a front or a rear LED may be used as a LED that shows the flight of the drone 200 (for example, red during flight and green when landed), and another LED may be used to make notification of the already mentioned status. In cases with an LED configuration such as this, it is desirable to use a rear LED to make notifications of status during high sensitivity image capturing.

Also, in the present embodiment, the control of an LED installed in the drone 200 was described as an example, but the light emitting member is not limited to this, and the present invention may be applied to a light emitting member installed in the digital video camera 100. For example, the controls may apply to the light emission of a photo interrupter that is provided in the interchangeable lens 101 which is a lens which can be interchanged. In such a case, the microcontroller 140 of the digital video camera 100 may perform the light emission control in the present embodiment, and the digital video camera 100 may operate as a light emission control apparatus. Also, differences occur depending on the type of the interchangeable lens 101 that is connected to the digital video camera 100, such as the angle of incidence changing by the angle of view changing, or the amount of light of the installed photo interrupter weakening or the light not leaking. For this reason, the light emission controls in the present embodiment may be changed according to the type of interchangeable lens 101 that is connected to the digital video camera 100. For example, a program line position at which a reduction of the amount of light is initiated may be changed, the level of light to be controlled may be changed, and it may be made so the amount of light is not controlled to begin with. Also, the types of standard exposure amount (such as exposure amount X) and the amount of light emitted from an LED, which are mentioned in the present embodiment, may be set in advance, and may be dynamically changed upon determining the degree of the influence of light based on the captured image.

Second Embodiment

The second embodiment describes, as an example of light emission control based on exposure settings, processing to control the light emission timing of the light emission unit 204 of the drone 200 based on the exposure settings of the digital video camera 100. The details of the control of light emission timing are not particularly limited, but with the following as an example, in cases in which the exposure amount corresponding to the exposure settings is high, control is performed such that the image capturing (exposure) of the digital video camera 100 and the light emission of the light emission unit 204 of the drone 200 are executed exclusively. In the second embodiment, the basic configurations of the digital video camera 100 and the drone 200 are similar to those in the first embodiment (see FIGS. 1 and 2). Below is primarily a detailed description of points which differ from the first embodiment.

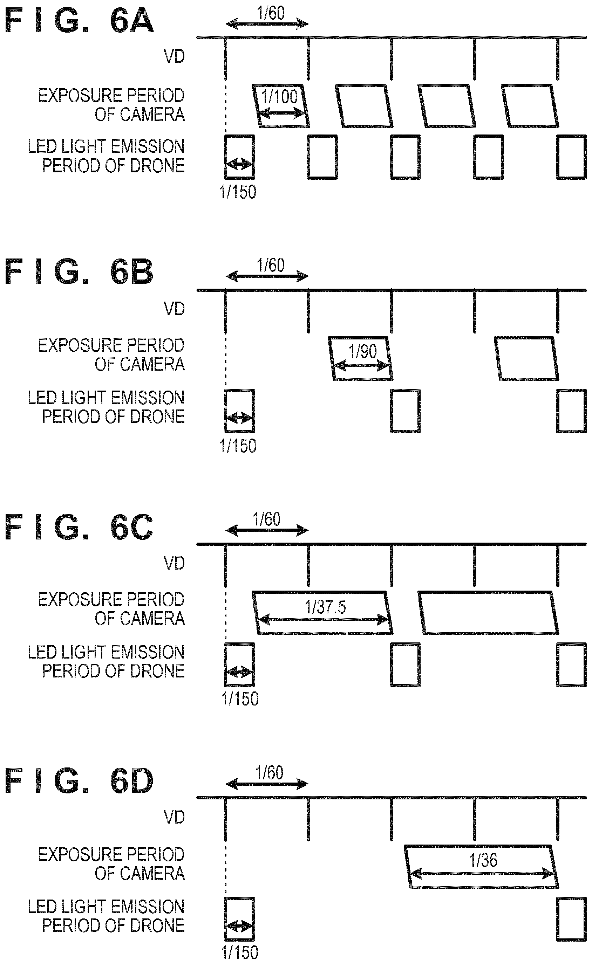

FIGS. 6A to 6D show an example of timing control related to the exclusive execution of the image capturing (exposure) of the digital video camera 100 and the light emission of the light emission unit 204 (LED) of the drone 200. Note that the digital video camera 100 and the drone 200 are synchronized by connection of GENLOCK terminals or the like. Also, the frame rate of the digital video camera 100 is 60 P, and the VD cycle is a cycle of 1/60. The microcontroller 201 of the drone 200 controls the flashing of an LED, with a single light emission period being 1/150 seconds.

FIG. 6A shows an exposure period of the digital video camera 100 and a light emission period of an LED of the drone 200 when the shutter speed is 1/100 seconds. The exposure period of the digital video camera 100 in a VD cycle is performed with the timing shown in the figure. For this reason, because a period of no exposure occurs for 1/150 seconds, the microcontroller 201 performs the light emission of an LED of the drone 200 with that timing. In cases in which the shutter speed is faster than 1/100 seconds, a period of no exposure occurs for 1/150 seconds or more, and therefore this control can be constantly applied.

FIG. 6B shows an exposure period of the digital video camera 100 and a light emission period of an LED of the drone 200 when the shutter speed is 1/90 seconds. Originally, a shutter speed between 1/100 seconds and 1/60 seconds is a shutter speed for controlling accumulation in 1 VD cycle. However, in cases in which the shutter speed is slower than 1/100 seconds, it becomes impossible to provide a light emission period of 1/150 second in 1 VD. For this reason, by changing to accumulation control in 2 VD cycles when the shutter speed is set to a slower shutter speed than 1/100, it is possible to perform control such that the LED light emission period of the drone 200 is ensured.

FIG. 6C shows the exposure period of the digital video camera 100 and the light emission period of an LED of the drone 200 when the shutter speed is 1/37.5 seconds. This diagram corresponds to a shutter speed setting which is the slowest speed in accumulation control with 2 VD cycles.

FIG. 6D shows the exposure period of the digital video camera 100 when the shutter speed is 1/36 seconds and the light emission period of an LED of the drone 200. Originally, a shutter speed between 1/37.5 seconds and 1/30 seconds is a shutter speed for controlling accumulation in 2 VD cycles. However, in cases in which the shutter speed is slower than 1/37.5 seconds, it becomes impossible to provide a light emission period of 1/150 seconds in 2 VD. For this reason, by changing to accumulation control in 4 VD cycles when the shutter speed is set to a shutter speed slower than 1/37.5 seconds, it is possible to perform control such that the LED light emission period of the drone 200 is ensured.

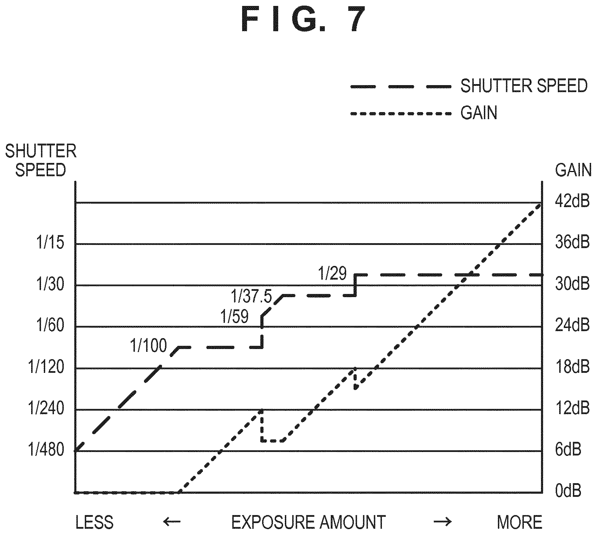

Unlike the control in FIGS. 6A to 6D, FIG. 7 shows an example of program line control that prevents, whenever possible, the use of a shutter speed at which a light emission period cannot be provided. Note that for the purpose of simplifying this description, the present program line is realized by using gain and shutter speed as two exposure setting parameters. However, the exposure setting parameters are not limited to these two parameters. For example, the program line may be realized with four parameters if aperture and an ND filter are added to these two exposure setting parameters.

The horizontal axis of FIG. 7 shows an exposure amount corresponding to the exposure settings, and the state at the left end is a state in which the exposure amount is the lowest, and is the state that is used when a high luminance photographic subject is to be captured. Conversely, the state at the right end is a state in which the exposure amount is the highest, and is the state that is used when a low luminance photographic subject is to be captured. According to the program line of FIG. 7, as the photographic subject becomes dark from the left end, the microcontroller 140 first switches to long exposure until the shutter speed reaches 1/100 seconds. This is the longest exposure period that can ensured the LED light emission period in accumulation control in 1 VD cycle. Next, the microcontroller 140 raises the gain from 0 dB to 12 dB. Then, the microcontroller 140 changes the shutter speed from 1/100 seconds, which is accumulation control in 1 VD cycle, to 1/59 seconds, which is accumulation control in 2 VD cycles, while simultaneously absorbing the discontinuously changed portion of the exposure amount by lowering the gain. Here, the shutter speed after switching need not be limited to 1/59 seconds, and may be changed to another shutter speed as long as it is accumulation control in 2 VD cycles. Next, the microcontroller 140 changes to long exposure until the shutter speed reaches 1/37.5 seconds. This is the longest exposure period which can ensure the LED light emission period in accumulation control in 2 VD cycles. Next, the microcontroller 140 raises the gain to 18 dB. Then, the microcontroller 140 changes the shutter speed from 1/37.5 seconds, which is accumulation control in 2 VD cycles, to 1/29 seconds, which is accumulation control in 4 VD cycles, and simultaneously absorbs the discontinuously changed portion of the exposure amount by lowering the gain. Here, the shutter speed after switching need not be limited to 1/29 seconds, and may be changed to another shutter speed as long as it is accumulation control in 4 VD cycles. Then, the microcontroller 140 raises the gain to 42 dB. Through this, it is possible to ensure the LED light emission period of the drone 200 is constantly 1/150 seconds.

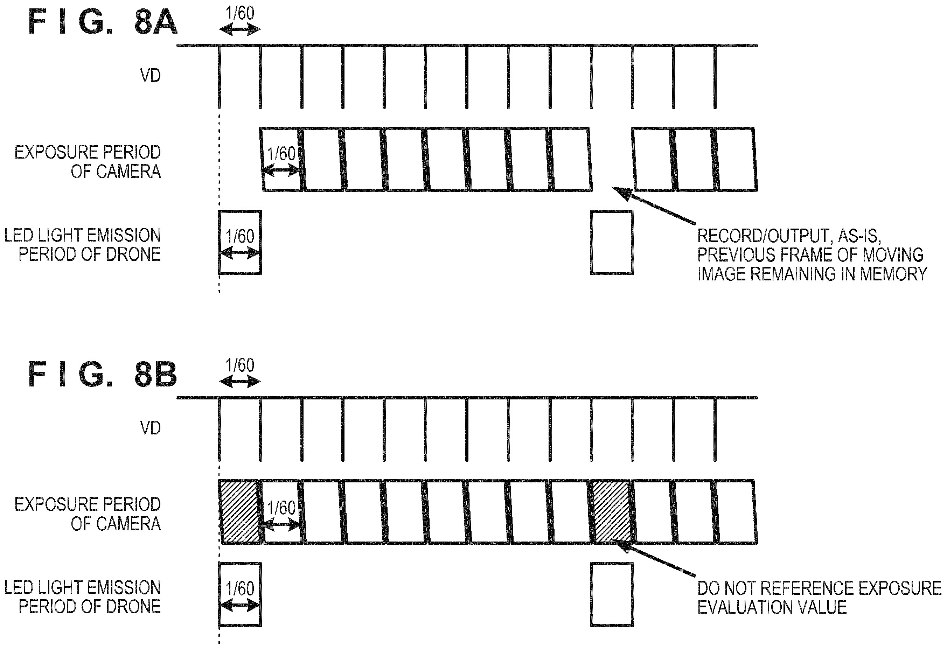

FIGS. 8A and 8B show another example of timing control related to the exclusive execution of the image capturing (exposure) of the digital video camera 100 and light emission of the light emission unit 204 (LED) of the drone 200 . Note that the digital video camera 100 and the drone 200 are synchronized by connection of GENLOCK terminals or the like. Also, the frame rate of the digital video camera 100 is 60 P and the VD cycle is 1/60 seconds. The microcontroller 201 of the drone 200 controls the flashing of an LED, with a single light emission period being 1/60 seconds.

FIG. 8A shows an exposure period of the digital video camera 100 and a light emission period of the LED of the drone 200 when the shutter speed is 1/60 seconds. The exposure period of the digital video camera 100 in the VD cycle is performed with the timing shown in the figure. Unlike FIGS. 6A to 6D, this is control in which a period of no exposure does not occur in 1 VD. For this reason, a period of no exposure is provided in an arbitrary cycle, and the light emission of the drone 200 is performed with that timing. Note that video recording and video output during a period of no exposure are controlled such that the immediately previous frame is temporarily stored in a memory, and that stored frame is recorded and output. This control can be applied in a similar way with other shutter speeds.

FIG. 8B shows another example of exclusive execution with the same shutter speed and LED light emission period as FIG. 8A. Note that, as a prerequisite, the LED flashing may be recorded in a captured video, but the aim is not to have the automatic exposure function operate abnormally (not have the exposure change due to the LED light). For this reason, exposure processing is constantly performed, and by performing control such that a video captured in a period of LED light emission is not referred to as exposure evaluation values, control is realized that prevents influencing the automatic exposure function.

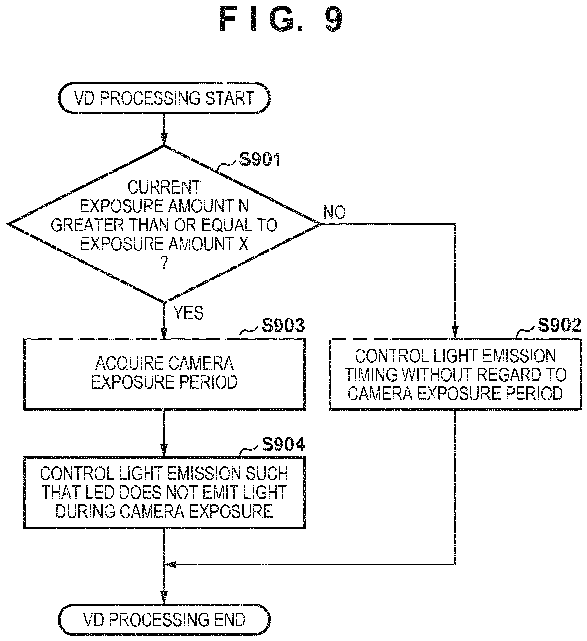

The following further describes the above processing with reference to FIG. 9. The processing of the steps in the present flowchart are, unless otherwise noted, realized by the microcontroller 201 executing a program. Also, the processing cycle is the VD cycle normally used in a digital video camera in the following description. Also, the processing of FIG. 9 can also be applied at the time of setting exposure through manual operation.

In step S901, the microcontroller 201 determines if the exposure amount N corresponding to the current exposure settings is greater than or equal to the exposure amount X. In step S901, in a case in which it is determined that the exposure amount N is greater than or equal to the exposure amount X, processing proceeds to step S903, and in cases in which it is not, processing proceeds to step S902.

In step S902, the microcontroller 201 sets the timing of the LED light emission without regard to the exposure period of the digital video camera 100.

In step S903, the microcontroller 201 acquires the exposure period of the digital video camera 100. For example, the microcontroller 201 can acquire the exposure period from the digital video camera 100 by communication via the image capture operation unit 209 and the external communication unit 123.

In step S904, the microcontroller 201 controls the light emission timing of the LED such that the LED does not emit light during exposure of the digital video camera 100.

Through the above processing, in cases in which the exposure amount corresponding to the exposure settings is large, it is possible to realize exclusive execution of the image capturing (exposure) of the digital video camera 100 and the light emission of the light emission unit 204 (LED) of the drone 200. For example, in cases in which the digital video camera 100 is capturing a moving image, the microcontroller 201 controls the light emission timing such that the LED emits light in a period between frames of a moving image in which the digital video camera 100 does not perform exposure. Through this, even in a state in which the exposure amount is large, or in other words a state of ultra-high sensitivity, it is possible to suppress the influence of the LED light on a captured image. Also, the microcontroller 201 can cause the LED to emit light such that it shows information related to the drone 200 during non-exposure of the digital video camera 100. For this reason, the user on land who is operating the drone 200 can recognize the position or movement direction of the drone 200 in flight.

The above is a detailed description based on preferable embodiments of the present invention, but the present invention is not limited to these specific embodiments.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications.

## Claims

1. A flying object (200) including an image capturing apparatus (100), the flying object comprising:

   a light emitting apparatus (204) that includes a light source and is configured to cause the light source to emit light to indicate a status of the flying object (200),
   a light emission control means (205) configured to control an amount of light emission of the light source included in the light emitting apparatus (204) according to an exposure setting of the image capturing apparatus (100),
   **characterized in that**
   the light emission control means (205) is configured to control the amount of light emission of the light source included in the light emitting apparatus (204) such that the amount of light emission of the light source included in the light emitting apparatus (204) is smaller in a case where the exposure setting corresponds to a second exposure amount larger than a first exposure amount than in a case where the exposure setting corresponds to the first exposure amount.

2. The flying object according to claim 1, wherein in the case where the exposure setting corresponds to the first exposure amount, the light emission control means (205) is configured to control the amount of light emission of the light source included in the light emitting apparatus (204) such that the light source included in the light emitting apparatus (204) emits light without flashing, and in the case where the exposure setting corresponds to the second exposure amount, the light emission control means (205) is configured to control the amount of light emission of the light source included in the light emitting apparatus (204) such that the light source included in the light emitting apparatus (204) flashes.

3. The flying object according to claim 2, wherein in a case of controlling the amount of light emission of the light source included in the light emitting apparatus (204) such that the light source flashes, the light emission control means (205) is configured to control the amount of light emission of the light source included in the light emitting apparatus (204) such that the light source included in the light emitting apparatus (204) does not emit light during exposure of the image capturing apparatus (100).

4. The flying object according to claim 1, wherein the light emission control means (205) is configured to control the amount of light emission of the light source included in the light emitting apparatus (204) such that light emission of the light source stops in the case where the exposure setting corresponds to the second exposure amount.

5. The flying object according to claim 1,

   wherein the light emitting apparatus (204) includes a plurality of light sources, and

the light emission control means (205) is configured to control a portion of the plurality of light sources.

6. The flying object according to claim 5, wherein the light emission control means (205) is configured to control, among the plurality of light sources, a light source that is arranged at a position that is included in an angle of view of the image capturing apparatus (100).

7. The flying object according to claim 5, wherein the light emission control means (205) is configured to control, among the plurality of light sources, a light source that is located on an image capturing direction side of the image capturing apparatus (100).

8. The flying object according to claim 1, wherein the light emitting apparatus (204) is configured to cause the light source included in the light emitting apparatus (204) to emit light to indicate a direction of movement of the flying object (200).

9. A control method for controlling a flying object (200) that includes an image capturing apparatus (100) and a light emitting apparatus (204), wherein the light emitting apparatus (204) includes a light source and is configured to cause the light source to emit light to indicate a status of the flying object (200), the control method comprising:

acquiring information regarding an exposure setting of the image capturing apparatus (100),
controlling an amount of light emission of the light source included in the light emitting apparatus (204) according to the exposure setting of the image capturing apparatus (100),
**characterized in that**
the amount of light emission of the light source included in the light emitting apparatus (204) is controlled such that the amount of light emission of the light source included in the light emitting apparatus (204) is smaller in a case where the exposure setting corresponds to a second exposure amount larger than a first exposure amount than in a case where the exposure setting corresponds to the first exposure amount.

10. A computer-readable storage medium which stores a program for causing a computer of a flying object (200) to execute a control method, wherein the flying object (200) includes an image capturing apparatus (100) and a light emitting apparatus (204), and the light emitting apparatus (204) includes a light source and is configured to cause the light source to emit light to indicate a status of the flying object (200), the control method comprising:

acquiring information regarding an exposure setting of the image capturing apparatus (100),
controlling an amount of light emission of the light source included in the light emitting apparatus (204) according to the exposure setting of the image capturing apparatus (100),
**characterized in that**
the amount of light emission of the light source included in the light emitting apparatus (204) is controlled such that the amount of light emission of the light source included in the light emitting apparatus (204) is smaller in a case where the exposure setting corresponds to a second exposure amount larger than a first exposure amount than in a case where the exposure setting corresponds to the first exposure amount.

11. A program for causing a computer of a flying object (200) to execute the control method according to claim 9.

**Patentansprüche**

1. Flugobjekt (200) mit einer Bildaufnahmevorrichtung (100), wobei das Flugobjekt aufweist:

eine lichtemittierende Vorrichtung (204), die eine Lichtquelle umfasst und konfiguriert ist zum Veranlassen der Lichtquelle zum Emittieren von Licht, um einen Status des Flugobjekts (200) zu bezeichnen,
eine Lichtemissionssteuereinrichtung (205), die konfiguriert ist zum Steuern eines Betrags einer Lichtemission der in der lichtemittierenden Vorrichtung (204) umfassten Lichtquelle gemäß einer Belichtungseinstellung der Bildaufnahmevorrichtung (100),
**dadurch gekennzeichnet, dass**
die Lichtemissionssteuereinrichtung (205) konfiguriert ist zum Steuern des Betrags einer Lichtemission der in der lichtemittierenden Vorrichtung (204) umfassten Lichtquelle, sodass der Betrag einer Lichtemission der in der lichtemittierenden Vorrichtung (204) umfassten Lichtquelle in einem Fall, in dem die Belichtungseinstellung einem zweiten Belichtungsbetrag entspricht, der größer ist als ein erster Belichtungsbetrag, kleiner ist als in einem Fall, in dem die Belichtungseinstellung dem ersten Belichtungsbetrag entspricht.

2. Flugobjekt gemäß Anspruch 1, wobei in dem Fall, in dem die Belichtungseinstellung dem ersten Belichtungsbetrag entspricht, die Lichtemissionssteuereinrichtung (205) konfiguriert ist zum Steuern des Betrags einer Lichtemission der in der lichtemittierenden Vorrichtung (204) umfassten Lichtquelle, sodass die in der lichtemittierenden Vorrichtung (204) umfasste Lichtquelle Licht ohne Blinken emittiert, und in dem Fall, in dem die Belichtungseinstellung dem zweiten Belichtungsbetrag entspricht, die Lichtemissionssteuereinrichtung (205) konfiguriert ist zum Steuern des Betrags einer Lichtemission der in der lichtemittierenden Vorrichtung (204) umfassten Lichtquelle, sodass die in der lichtemittierenden Vorrichtung (204) umfasste Lichtquelle blinkt.

3. Flugobjekt gemäß Anspruch 2, wobei in einem Fall einer Steuerung des Betrags einer Lichtemission der in der lichtemittierenden Vorrichtung (204) umfassten Lichtquelle, sodass die Lichtquelle blinkt, die Lichtemissionssteuereinrichtung (205) konfiguriert ist zum Steuern des Betrags einer Lichtemission der in der lichtemittierenden Vorrichtung (204) umfassten Lichtquelle, sodass die in der lichtemittierenden Vorrichtung (204) umfasste Lichtquelle während einer Belichtung der Bildaufnahmevorrichtung (100) kein Licht emittiert.

4. Flugobjekt gemäß Anspruch 1, wobei die Lichtemissionssteuereinrichtung (205) konfiguriert ist zum Steuern des Betrags einer Lichtemission der in der lichtemittierenden Vorrichtung (204) umfassten Lichtquelle, sodass eine Lichtemission der Lichtquelle in dem Fall stoppt, in dem die Belichtungseinstellung dem zweiten Belichtungsbetrag entspricht.

5. Flugobjekt gemäß Anspruch 1,

   wobei die lichtemittierende Vorrichtung (204) eine Vielzahl von Lichtquellen umfasst, und
   die Lichtemissionssteuereinrichtung (205) konfiguriert ist zum Steuern eines Teils der Vielzahl von Lichtquellen.

6. Flugobjekt gemäß Anspruch 5, wobei die Lichtemissionssteuereinrichtung (205) konfiguriert ist zum Steuern, unter der Vielzahl von Lichtquellen, einer Lichtquelle, die an einer Position angeordnet ist, die in einem Blickwinkel der Bildaufnahmevorrichtung (100) umfasst ist.

7. Flugobjekt gemäß Anspruch 5, wobei die Lichtemissionssteuereinrichtung (205) konfiguriert ist zum Steuern, unter der Vielzahl von Lichtquellen, einer Lichtquelle, die sich auf einer Bildaufnahmerichtungsseite der Bildaufnahmevorrichtung (100) befindet.

8. Flugobjekt gemäß Anspruch 1, wobei die lichtemittierende Vorrichtung (204) konfiguriert ist zum Veranlassen der in der lichtemittierenden Vorrichtung (204) umfassten Lichtquelle zum Emittieren von Licht, um eine Bewegungsrichtung des Flugobjekts (200) zu bezeichnen.

9. Steuerverfahren zur Steuerung eines Flugobjekts (200), das eine Bildaufnahmevorrichtung (100) und eine lichtemittierende Vorrichtung (204) umfasst, wobei die lichtemittierende Vorrichtung (204) eine Lichtquelle umfasst und konfiguriert ist zum Veranlassen der Lichtquelle zum Emittieren von Licht, um einen Status des Flugobjekts (200) zu bezeichnen, wobei das Steuerverfahren aufweist:

   Erfassen von Informationen bezüglich einer Belichtungseinstellung der Bildaufnahmevorrichtung (100),
   Steuern eines Betrags einer Lichtemission der in der lichtemittierenden Vorrichtung (204) umfassten Lichtquelle gemäß der Belichtungseinstellung der Bildaufnahmevorrichtung (100),
   **dadurch gekennzeichnet, dass**
   der Betrag einer Lichtemission der in der lichtemittierenden Vorrichtung (204) umfassten Lichtquelle gesteuert wird, sodass der Betrag einer Lichtemission der in der lichtemittierenden Vorrichtung (204) umfassten Lichtquelle in einem Fall, in dem die Belichtungseinstellung einem zweiten Belichtungsbetrag entspricht, der größer ist als ein erster Belichtungsbetrag, kleiner ist als in einem Fall, in dem die Belichtungseinstellung dem ersten Belichtungsbetrag entspricht.

10. Computerlesbares Speichermedium, das ein Programm zum Veranlassen eines Computers eines Flugobjekts (200) zum Ausführen eines Steuerverfahrens speichert, wobei das Flugobjekt (200) eine Bildaufnahmevorrichtung (100) und eine lichtemittierende Vorrichtung (204) umfasst, und die lichtemittierende Vorrichtung (204) eine Lichtquelle umfasst und konfiguriert ist zum Veranlassen der Lichtquelle zum Emittieren von Licht, um einen Status des Flugobjekts (200) zu bezeichnen, wobei das Steuerverfahren aufweist:

Erfassen von Informationen bezüglich einer Belichtungseinstellung der Bildaufnahmevorrichtung (100),
Steuern eines Betrags eine Lichtemission der in der lichtemittierenden Vorrichtung (204) umfassten Lichtquelle gemäß der Belichtungseinstellung der Bildaufnahmevorrichtung (100),
**dadurch gekennzeichnet, dass**
der Betrag einer Lichtemission der in der lichtemittierenden Vorrichtung (204) umfassten Lichtquelle gesteuert wird, sodass der Betrag einer Lichtemission der in der lichtemittierenden Vorrichtung (204) umfassten Lichtquelle in einem Fall, in dem die Belichtungseinstellung einem zweiten Belichtungsbetrag entspricht, der größer ist als ein erster Belichtungsbetrag, kleiner ist als in einem Fall, in dem die Belichtungseinstellung dem ersten Belichtungsbetrag entspricht.

**11.** Programm zum Veranlassen eines Computers eines Flugobjekts (200) zum Ausführen des Steuerverfahrens gemäß Anspruch 9.

**Revendications**

**1.** Objet volant (200) comprenant un appareil de capture d'image (100), l'objet volant comprenant :

un appareil d'émission de lumière (204) qui comprend une source de lumière et qui est configuré pour amener la source de lumière à émettre de la lumière pour indiquer un état de l'objet volant (200),
un moyen de commande d'émission de lumière (205) configuré pour commander une quantité d'émission de lumière de la source de lumière comprise dans l'appareil d'émission de lumière (204) conformément à un paramètre d'exposition de l'appareil de capture d'image (100),
**caractérisé en ce que** le moyen de commande d'émission de lumière (205) est configuré pour commander la quantité d'émission de lumière de la source de lumière comprise dans l'appareil d'émission de lumière (204) de sorte que la quantité d'émission de lumière de la source de lumière comprise dans l'appareil d'émission de lumière (204) soit plus faible dans un cas dans lequel le paramètre d'exposition correspond à une seconde quantité d'exposition supérieure à une première quantité d'exposition que dans un cas dans lequel le paramètre d'exposition correspond à la première quantité d'exposition.

**2.** Objet volant selon la revendication 1, dans lequel, dans le cas dans lequel le paramètre d'exposition correspond à la première quantité d'exposition, le moyen de commande d'émission de lumière (205) est configuré pour commander la quantité d'émission de lumière de la source de lumière comprise dans l'appareil d'émission de lumière (204) de sorte que la source de lumière comprise dans l'appareil d'émission de lumière (204) émette de la lumière sans clignoter, et dans le cas dans lequel le paramètre d'exposition correspond à la seconde quantité d'exposition, le moyen de commande d'émission de lumière (205) est configuré pour commander la quantité d'émission de lumière de la source de lumière comprise dans l'appareil d'émission de lumière (204) de sorte que la source de lumière comprise dans l'appareil d'émission de lumière (204) clignote.

**3.** Objet volant selon la revendication 2, dans lequel, dans un cas de commande de la quantité d'émission de lumière de la source de lumière comprise dans l'appareil d'émission de lumière (204) de sorte que la source de lumière clignote, le moyen de commande d'émission de lumière (205) est configuré pour commander la quantité d'émission de lumière de la source de lumière comprise dans l'appareil d'émission de lumière (204) de sorte que la source de lumière comprise dans l'appareil d'émission de lumière (204) n'émette pas de lumière pendant une exposition de l'appareil de capture d'image (100).

**4.** Objet volant selon la revendication 1, dans lequel le moyen de commande d'émission de lumière (205) est configuré pour commander la quantité d'émission de lumière de la source de lumière comprise dans l'appareil d'émission de lumière (204) de sorte qu'une émission de lumière de la source de lumière s'arrête dans un cas dans lequel le paramètre d'exposition correspond à la seconde quantité d'exposition.

**5.** Objet volant selon la revendication 1,

dans lequel l'appareil d'émission de lumière (204) comprend une pluralité de sources de lumière, et
le moyen de commande d'émission de lumière (205) est configuré pour commander une partie des sources de lumière de la pluralité de sources de lumière.

**6.** Objet volant selon la revendication 5, dans lequel le moyen de commande d'émission de lumière (205) est configuré pour commander, parmi les sources de lumière de la pluralité de sources de lumière, une source de lumière qui est disposée à une position comprise dans un angle de vision de l'appareil de capture d'image (100).

7.  Objet volant selon la revendication 5, dans lequel le moyen de commande d'émission de lumière (205) est configuré pour commander, parmi les sources de lumière de la pluralité de sources de lumière, une source de lumière située d'un côté direction de capture d'image de l'appareil de capture d'image (100).

8.  Objet volant selon la revendication 1, dans lequel l'appareil d'émission de lumière (204) est configuré pour amener la source de lumière comprise dans l'appareil d'émission de lumière (204) à émettre de la lumière pour indiquer une direction de déplacement de l'objet volant (200) .

9.  Procédé de commande pour commander un objet volant (200) qui comprend un appareil de capture d'image (100) et un appareil d'émission de lumière (204), dans lequel l'appareil d'émission de lumière (204) comprend une source de lumière et est configuré pour amener la source de lumière à émettre de la lumière pour indiquer un état de l'objet volant (200), le procédé de commande comprenant les étapes consistant à :

    acquérir des informations concernant un paramètre d'exposition de l'appareil de capture d'image (100),
    commander une quantité d'émission de lumière de la source de lumière comprise dans l'appareil d'émission de lumière (204) conformément au paramètre d'exposition de l'appareil de capture d'image (100),
    **caractérisé en ce que** la quantité d'émission de lumière de la source de lumière comprise dans l'appareil d'émission de lumière (204) est commandée de sorte que la quantité d'émission de lumière de la source de lumière comprise dans l'appareil d'émission de lumière (204) soit plus faible dans un cas dans lequel le paramètre d'exposition correspond à une seconde quantité d'exposition supérieure à une première quantité d'exposition que dans un cas dans lequel le paramètre d'exposition correspond à la première quantité d'exposition.

10. Support d'informations lisible par ordinateur qui contient en mémoire un programme destiné à amener un ordinateur d'un objet volant (200) à exécuter un procédé de commande, dans lequel l'objet volant (200) comprend un appareil de capture d'image (100) et un appareil d'émission de lumière (204), et l'appareil d'émission de lumière (204) comprend une source de lumière et est configuré pour amener la source de lumière à émettre de la lumière pour indiquer un état de l'objet volant (200), le procédé de commande comprenant les étapes consistant à :

    acquérir des informations concernant un paramètre d'exposition de l'appareil de capture d'image (100),
    commander une quantité d'émission de lumière de la source de lumière comprise dans l'appareil d'émission de lumière (204) conformément au paramètre d'exposition de l'appareil de capture d'image (100),
    **caractérisé en ce que** la quantité d'émission de lumière de la source de lumière comprise dans l'appareil d'émission de lumière (204) est commandée de sorte que la quantité d'émission de lumière de la source de lumière comprise dans l'appareil d'émission de lumière (204) soit plus faible dans un cas dans lequel le paramètre d'exposition correspond à une seconde quantité d'exposition supérieure à une première quantité d'exposition que dans un cas dans lequel le paramètre d'exposition correspond à la première quantité d'exposition.

11. Programme destiné à amener un ordinateur d'un objet volant (200) à exécuter le procédé de commande selon la revendication 9.

DIGITAL VIDEO CAMERA 100

INTER-CHANGEABLE LENS 101

ND FILTER 103

IMAGE SENSOR 102

MEMORY I/F UNIT 116

MEMORY 117

IMAGE PROCESSING UNIT 118

DISTANCE MEASURING UNIT 108

RECORDING MEDIUM I/F UNIT 104 — RECORDING MEDIUM 105

DISPLAY I/F UNIT 106 — DISPLAY UNIT 107

EXTERNAL OUTPUT I/F UNIT 120 — EXTERNAL OUTPUT UNIT 121

GPU 115

MICRO-CONTROLLER 140

GAIN CONTROL UNIT 109

SHUTTER CONTROL UNIT 110

ND FILTER CONTROL UNIT 111

APERTURE CONTROL UNIT 112

FOCUS CONTROL UNIT 113

SHAKE-PREVENTION CONTROL UNIT 114

EXTERNAL COMMUNICATION I/F UNIT 122 — EXTERNAL COMMUNICATION UNIT 123

EXTERNAL SYNCHRONIZATION I/F UNIT 124 — EXTERNAL SYNCHRONIZATION UNIT 125

KEY INPUT UNIT 126

F I G. 1

15

# F I G. 2

EP 3 450 311 B1

# FIG. 3

LEGEND:
- APERTURE
- SHUTTER SPEED
- GAIN
- LED LUMINANCE

LED LUMINANCE HIGH

APERTURE F11

GAIN 6dB

SHUTTER SPEED 1/500
GAIN 0dB

GAIN 30dB

SHUTTER SPEED 1/60

APERTURE F2.0
LED LUMINANCE LOW

A          B

LESS    ←    EXPOSURE AMOUNT    →    MORE

EP 3 450 311 B1

# FIG. 4

```
        ( VD PROCESSING START )
                   |
                   v
              ⟨ S401 ⟩
        CURRENT EXPOSURE              NO
        AMOUNT N GREATER THAN OR  ----------->
        EQUAL TO EXPOSURE                        ⟨ S402 ⟩
        AMOUNT X?                          TURN ALL LEDS TO ON,
                   | YES                   MAXIMIZE AMOUNT OF LIGHT
                   v                                 |
        TURN LED IN MOVEMENT DIRECTION               |
        (FORWARD) TO OFF, CHANGE LIGHT   ⟨ S403 ⟩    |
        EMISSION PATTERN OF REAR LED                 |
                   |                                 |
                   v                                 |
              ⟨ S404 ⟩                               |
        CURRENT EXPOSURE              NO             |
        AMOUNT N GREATER THAN OR  ----------->       |
        EQUAL TO EXPOSURE                   ⟨ S405 ⟩ |
        AMOUNT Y?                       MAXIMIZE AMOUNT OF
                   | YES                 LIGHT OF REAR LED
                   v                           |
              ⟨ S406 ⟩                         |
        CURRENT EXPOSURE              NO
        AMOUNT N GREATER THAN OR  ----------->
        EQUAL TO EXPOSURE                   ⟨ S408 ⟩
        AMOUNT Z?                       SET AMOUNT OF LIGHT OF REAR
                   | YES                LED TO BRIGHTNESS OF (MAXIMUM
                   |   ⟨ S407 ⟩         AMOUNT OF LIGHT) × ((Z–N)÷(Z–Y))
                   v
        TURN ALL LEDS TO OFF
                   |
                   v
        ( VD PROCESSING END )
```

Decision S401: CURRENT EXPOSURE AMOUNT N GREATER THAN OR EQUAL TO EXPOSURE AMOUNT X? — NO → S402: TURN ALL LEDS TO ON, MAXIMIZE AMOUNT OF LIGHT — YES → S403.

S403: TURN LED IN MOVEMENT DIRECTION (FORWARD) TO OFF, CHANGE LIGHT EMISSION PATTERN OF REAR LED.

Decision S404: CURRENT EXPOSURE AMOUNT N GREATER THAN OR EQUAL TO EXPOSURE AMOUNT Y? — NO → S405: MAXIMIZE AMOUNT OF LIGHT OF REAR LED — YES → S406.

Decision S406: CURRENT EXPOSURE AMOUNT N GREATER THAN OR EQUAL TO EXPOSURE AMOUNT Z? — NO → S408: SET AMOUNT OF LIGHT OF REAR LED TO BRIGHTNESS OF (MAXIMUM AMOUNT OF LIGHT) × $((Z-N) \div (Z-Y))$ — YES → S407: TURN ALL LEDS TO OFF.

# FIG. 5A

IMAGE CAPTURING DIRECTION

LIGHT EMITTING MEMBER (COLOR A)

LIGHT EMITTING MEMBER (COLOR B)

# FIG. 5B

IMAGE CAPTURING DIRECTION

LIGHT EMITTING MEMBER (COLOR A)

LIGHT EMITTING MEMBER (COLOR B)

# FIG. 5C

IMAGE CAPTURING DIRECTION

LIGHT EMITTING MEMBER (FLASH CYCLE 1)

LIGHT EMITTING MEMBER (FLASH CYCLE 2)

# F I G. 6A

1/60

VD

EXPOSURE PERIOD
OF CAMERA

1/100

LED LIGHT EMISSION
PERIOD OF DRONE

1/150

# F I G. 6B

1/60

VD

EXPOSURE PERIOD
OF CAMERA

1/90

LED LIGHT EMISSION
PERIOD OF DRONE

1/150

# F I G. 6C

1/60

VD

EXPOSURE PERIOD
OF CAMERA

1/37.5

LED LIGHT EMISSION
PERIOD OF DRONE

1/150

# F I G. 6D

1/60

VD

EXPOSURE PERIOD
OF CAMERA

1/36

LED LIGHT EMISSION
PERIOD OF DRONE

1/150

# F I G. 7

# FIG. 8A

$1/60$

VD

EXPOSURE PERIOD OF CAMERA

$1/60$

LED LIGHT EMISSION PERIOD OF DRONE

$1/60$

RECORD/OUTPUT, AS-IS, PREVIOUS FRAME OF MOVING IMAGE REMAINING IN MEMORY

# FIG. 8B

$1/60$

VD

EXPOSURE PERIOD OF CAMERA

$1/60$

LED LIGHT EMISSION PERIOD OF DRONE

$1/60$

DO NOT REFERENCE EXPOSURE EVALUATION VALUE

EP 3 450 311 B1

# F I G. 9

VD PROCESSING START

**S901**
CURRENT
EXPOSURE AMOUNT N
GREATER THAN OR EQUAL TO
EXPOSURE AMOUNT X
?

NO

YES

**S903**
ACQUIRE CAMERA
EXPOSURE PERIOD

**S902**
CONTROL LIGHT EMISSION
TIMING WITHOUT REGARD TO
CAMERA EXPOSURE PERIOD

**S904**
CONTROL LIGHT EMISSION SUCH
THAT LED DOES NOT EMIT LIGHT
DURING CAMERA EXPOSURE

VD PROCESSING END

**EP 3 450 311 B1**

**Patent documents cited in the description**

- JP 11049099 A
- JP 2004268722 A
- CN 107005656 A
- WO 2016197307 A1
- US 5959668 A